(19) Europäisches Patentamt
European Patent Office
Office européen des brevets

(11) Publication number: **0 095 554**
**A2**

(12) # EUROPEAN PATENT APPLICATION

(21) Application number: **83101310.7**

(22) Date of filing: **11.02.83**

(51) Int. Cl.³: **B 01 D 13/04**, A 61 M 1/03, D 01 D 5/24

(30) Priority: **30.04.82 SE 8202743**

(43) Date of publication of application: **07.12.83**
**Bulletin 83/49**

(84) Designated Contracting States: **AT BE CH DE FR GB IT LI LU NL**

(71) Applicant: **GAMBRO DIALYSATOREN K.G., Postfach 1323, D-7450 Hechingen (DE)**
Applicant: **GAMBRO, INC., 2387 Kelsey Road, Barrington Ill. 60010 (US)**

(72) Inventor: **Göhl, Hermann Joseph, Ganswies 8, D-7457 Bisingen-Zimmern (DE)**
Inventor: **Ohmayer, Maria Theresia, Hofgasse 1, D-7457 Bisingen (DE)**
Inventor: **Gullberg, Claes-Ake, Höstagillesvägen 32, S-222 51 Lund (SE)**
Inventor: **Konstantin, Peter, 2341 E. Evergreen Ave., West Covina CA 91791 (US)**

(74) Representative: **Boberg, Nils Gunnar Erik, Gambro AB Patent Department Box 10101, S-220 10 Lund (SE)**

(54) **Microporous hollow fiber membrane for plasmapheresis and process for the preparation of the membrane.**

(57) Plasmapheresis hollow fiber membrane of a hydorphilic polyether-polycarbonate block copolymer of the general formula:

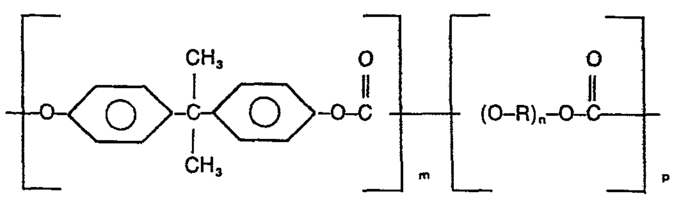

wherein R is designating $CH_2CH_2$ or combinations of $CH_2$–CH = CH and CH = CH, preferably $CH_2CH_2$, m = 40–100, preferably 80, n = 10–155, preferably 152, and p = 0.5–3, preferably 1.

The hollow fiber membrane, which may be prepared without any wetting, hydrophilizing or plasticizing agent and therefore need not be washed prior to use, has pores having an average pore size which can be freely set within the range of from 0.008 µm to 0.8 µm corresponding to a similarly freely set cut-off of the hollow fiber membrane of from $10^5$ Daltons to $3 \times 10^6$ Daltons. The porosity of the hollow fiber membrane is above 65%, and the membrane thickness is usually 20–300 µm, preferably 40–80 µm.

Said holow fiber membrane is prepared by extruding a solution containing the hydrophilic polyether-polycarbonate block copolymer togehter with a center liquid in the form of a hollow fiber into a gelling medium having the capability of only slowly transferring the extruded hollow fiber into a solid state.

Examples of preferred gelling media are acetone/alcohol mixtures, and polar solvent/alcohol mixtures. Examples of said center liquid may be paraffin, or a liquid of the same composition as the used gelling medium.

EP 0 095 554 A2

## TITLE

MICROPOROUS HOLLOW FIBER MEMBRANE FOR PLASMAPHERESIS AND PROCESS FOR THE PREPARATION OF THE MEMBRANE

## TECHNICAL FIELD

This invention relates to a microporous hollow fiber membrane of hydrophilic polyether-polycarbonate block copolymer for use in plasmapheresis.

Furthermore, the invention relates to a process for the preparation of said membrane, according to which a solution containing the hydrophilic polyether-polycarbonate block copolymer is extruded in the form of a hollow fiber which is then gelled and optionally washed.

By the expression "plasmapheresis" is intended to mean a membrane separation procedure for whole blood according to which blood cells are separated from plasma for obtaining a blood cell rich fraction and a plasma rich fraction which is essentially free of blood cells but which is containing essentially all plasma proteins contained in the whole blood. The whole blood is passed in contact with one side of the membrane (blood side) while it is exposed to a sufficiently high pressure such that permeable fractions of the whole blood (plasma fraction) is penetrating the pores of the membrane, while the blood cell rich fraction is retained on the blood side of the membrane. Such a separation is realizable provided that the used membrane has a cut-off of the order of magnitude of up to $3 \times 10^6$ Daltons.

## TECHNICAL BACKGROUND

Microporous hollow fiber membranes for use in plasmapheresis as well as processes for the preparation of the membranes are known and described in the literature.

Trans. Am. Soc. Artif. Int. Org. 1978 describes for example a plasmapheresis hollow fiber membrane of a hydrophobic polycarbonate polymer, and the German Patent Applications DE-OS 22 57 697 and 28 28 616 are relating to similar hollow fiber membranes of cellulose diacetate.

A serious disadvantage of these known hollow fiber membranes is that they show only a relatively narrow cut-off (between $1 \times 10^6$ and $3 \times 10^6$ Daltons) and relatively low filtration rates which tend to decrease drastically during the separation procedure. A further serious disadvantage is that the pore openings show a sharp edge which may cause hemolysis when the membrane is used for plasmapheresis.

European Patent Application Publication No. 0 044 405 relates to a microporous hollow fiber membrane of polypropylene. A disadvantage of this hollow fiber membrane is that it has larger pores on the blood side, which may easily cause hemolysis at the beginning of a separation treatment.

Further examples of literature describing different uses and processes for the preparation of membranes of polyether-polycarbonate block copolymers are U.S. Patents 4 069 151, 4 075 108 and 4 160 791, British Patent 1 556 891, Swedish Patent Application No. 80.05380, the European Patent Applications Nos. 80104678, 80105185, and 80105195, and German Patent Application DE-OS 29 21 138.

An object of the present invention is therefore to provide an improved microporous hollow fiber membrane which essentially completely eliminates the disadvantages of the above-mentioned known hollow fiber membranes.

Another object is to provide process for the preparation of such an improved microporous hollow fiber membrane.

These objects are achieved in accordance with the present invention by means of the hollow fiber membrane

and the process according to the accompanying claims 1 and 6, respectively.

BRIEF DESCRIPTION OF THE INVENTION

According to the invention there is provided a microporous hollow fiber membrane of hydrophilic polyether-polycarbonate block copolymer for use in plasmapheresis. The hollow fiber membrane is characterized by comprising an essentially symmetric wall structure having smoothly rounded pore openings without sharp edges.

According to the invention there is also provided a process for the preparation of a microporous hollow fiber membrane of a hydrophilic polyether polycarbonate block copolymer for plasmapheresis, which process comprises extruding a solution of the hydrophilic polyether polycarbonate block copolymer in the form of a hollow fiber and then gelling and optionally washing the extruded hollow fiber. The process is characterized in that the extruded hollow fiber is gelled with the use of a gelling medium having the capability of only slowly transferring the extruded hollow fiber into a solid state to obtain a microporous hollow fiber membrane comprising an essentially symmetric wall structure having smoothly rounded pore openings without sharp edges.

DETAILED DESCRIPTION OF THE INVENTION

For a better understanding of the present invention it should be noted that the expression "symmetric wall structure" is intended to mean an essentially cylindrical wall structure with pores which neither increase nor decrease in size within the membrane and which show essentially the same size on both sides of the cylindrical wall.

The present hollow fiber membrane has pores with an average diameter which can be freely set within the range of from about 0.008 $\mu m$ to about 0.8 $\mu m$ corresponding to

a cut-off value which similarly can be freely set within the range of from about $10^5$ Daltons to about $3 \times 10^6$ Daltons depending on the intended use of the hollow fiber membrane.

For example, if the hollow fiber membrane is to be used for separation of plasma from whole blood, the hollow fiber membrane conveniently has a cut-off of about $3 \times 10^6$ Daltons corresponding to sufficiently large pores to pass practically all plasma proteins therethrough. On the other hand, if the hollow fiber membrane is to be used for separation of a selected protein, such as albumin (molecular weight 68 000), from the plasma the hollow fiber membrane preferably has a cut-off of between $10^5$ Daltons and $2 \times 10^5$ Daltons corresponding to pores of an average pore size such that the albumin as well as lower molecular proteins pass through the membrane, while higher molecular weight proteins such as IgG, IgA, IgM are retained on the blood side of the hollow fiber membrane. Hollow fiber membranes having a cut-off of about $10^6$ Daltons are suitable for the separation of proteins having molecular weights of up to $10^6$ Daltons (globulines) from the remaining plasma proteins.

Preferably, the hollow fiber membrane according to the invention has a porosity of above 65%, preferably 80-85%, whereby high filtration rates are secured. The thickness of the hollow fiber membrane may vary, but is usually 20 - 300 μm, preferably 40-80 μm, most preferred 50 μm.

An especially preferred hydrophilic polyether polycarbonate block copolymer for the hollow fiber membrane according to the invention is a bisphenol A/polyalkylene oxide polycondensate having the general formula

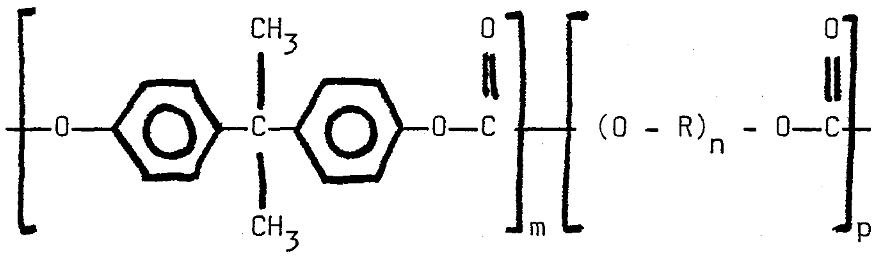

wherein R is designating $CH_2CH_2$ or combinations of $CH_2$-CH=CH and CH=CH, preferably $CH_2CH$, m = 40 - 100, preferably 80, n = 10-155, preferbly 152, and p = 0.5 - 3, preferably 1.

The polyalkylene oxide has suitably a molecular weight of 600 - 20 000 Daltons, and is used in amounts of 1 - 30%, preferably 20%.

In the process according to the invention a bisphenol A/polyalkylene oxide polycondensate of the above general formula is preferably used as said hydrophilic polyether polycarbonate block copolymer.

For preparing the spinning solution, the polymer is solved in a solvent. Such a solvent may be dioxane, dioxolane, dimethyl sulphoxide (DMSO), dimethyl formamide (DMF), dimethyl acetate (DMAc) or mixtures therof. This solution is then spun through a bicomponent jet in baths whose special composition is described below.

In order to obtain the symmetric wall structure having smoothly rounded pore openings without sharp edges of the hollow fiber membrane according to the invention it is essential that the extruded hollow fiber is slowly transferred into solid state. Therefore a gelling medium having the capability of only slowly transferring the extruded hollow fiber into a solid state is used. Examples of such gelling mediums may be acetone/alcohol mixtures, preferably containing acetone and alcohol in a mix ratio of 3:1. A suitable alcohol according to the invention is isopropyl alcohol. Further examples of suitable alcohols

may be lower alkyl alcohols such as ethanol, methanol etc.

A further example of such a gelling medium may be mixtures of a polar solvent and an alcohol, preferably containing the polar solvent and the alcohol in a mixed ratio of between 2:1 and 1:2, most preferred 1:1. Again, isopropyl alcohol is a suitable alcohol. Further examples of suitable alcohols may be lower alkyl alcohols such as ethanol, methanol etc.

According to the invention the polymer solution containing the hydrophilic polyether polycarbonate block copolymer is suitably extruded in a gelling bath of the above composition at a temperature of between 10 and 30°C, preferably at ambient temperature. The gelling procedure takes about 1 minute and during the gelling the extruded hollow fiber is elastic and cannot be conveyed by rollers through possible following wash baths. In order to make the extruded and gelled hollow fiber mechanically stable it is suitable to remove the gelling medium in the hollow fiber membrane in consecutive steps. In a first such step use is preferably made of a washing medium which is only slowly exchangable with the gelling medium. Alcohols have been found to be suitable, preferably isopropyl alcohol. Further examples of suitable alcohols may be lower alkyl alcohols such as ethanol, methanol etc. In a following step any suitable flush liquid may be used, for example water and/or alcohol to flush the hollow fiber membrane free from possible remaining solvents and additives.

Of especial concern to obtain the above-mentioned pore sizes of the hollow fiber membrane according to the invention is the choice of the center liquid. Examples of suitable center liquids may be either a medium which is non-miscible with the used solvent for the polyether-polycarbonate block copolymer or a medium of the same composition as the above-mentioned gelling medium.

In order to vary the pore size of the holow fiber membrane according to the invention varying amounts of

non-solvents (pore formers) may be added to the polymer solution. Examples of such pore formers are polyalkylene oxide, salt, glycerin, polyvinyl pyrrolidone (PVP), preferably polyethylene glycol (PEG). The amount of said pore former may vary up to about 10%.

The viscosity (by falling sphere viscosimeter) of the polymer solution is generally between 2 000 cps and 50 000 cps, preferably 20 000 cps, measured at 20°C.

The present invention will be further illustrated by the following examples.

Example 1

13% by weight of the polyether-polycarbonate block copolymer was solved in 83% 1.3-dioxolane at room temperature, mixed with 4% by weight of polyethylene glycol (PEG 10 000), and the solution was filtered and degassed. The viscosity of the polymer solution was 25 000 cps.

The polymer solution was extruded through an extrusion die together with a center liquid of acetone/isopropyl alcohol (3:1) into a gelling bath having the same composition as the used center liquid.

The resultant hollow fiber membrane has the following characteristics

- Filtration for water: 1 ml/sec x $cm^2$ x bar
- Permeability to Factor VIII: 99% (Mw ca $1.4 \times 10^6$)
- Permeability to lipoprotein: 95% (Mw $2.4 \times 10^6$)
- Filtration for blood at 50 mmHg: $40.10^{-4}$ ml/sec x $cm^2$ x bar
- Inner diameter 300 µm
- Wall thickness 80 µm

Example 2

14% of the hydrophilic polyether polycarbonate block copolymer was dissolved in 83% 1.3-dioxolane and mixed

with 3% PLURONIC 6800 (polyethylene oxide polypropylene oxide copolymer manufactured by BASF Wyandotte) and the solution was filtered and degassed.

The polymer solution was extruded through an annular die with a center liquid of paraffin into a gelling bath of dimethyl formamide/isopropyl alcohol (2:1).

The resultant hollow fiber membrane has the following characteristics:

| | |
|---|---|
| - Filtration for water: | 0.5 ml/sec x $cm^2$ x bar |
| - Permeability to IgM: (Mw 900,000) | 95% |
| - Permeability to β-lipoprotein (Mw 2.4 x $10^6$) | 5% |
| - Inner diameter | 300 μm |
| - Wall thickness | 80μm |

Example 3

13% by weight of the hydrophilic polyether polycarbonate block copolymer was dissolved in 86% dioxolane and mixed with 1% polyethylene glycol (PEG 10 000). The polymer solution was filtered and degassed and had a viscosity of 20 000 cps.

The polymer solution was extruded through an annular die with a center liquid of acetone/isopropyl alcohol (3:1) in a gelling bath of the same composition as the used center liquid. The gelled hollow fiber was passed through a isopropyl alcohol flush liquid and then dried.

The resultant hollow fiber membrane has the following characteristics:

| | |
|---|---|
| - Filtration for water: | 0.03 ml/s x $cm^2$ x bar |
| - Permeability to albumin: (Mw 68,000) | 100% |
| - Permeability to IgM: | 0% |
| - Inner diameter | 250 μm |
| - Wall thickness | 70 μm |

INDUSTRIAL APPLICABILITY

The present hollow fiber membrane is intended for use in plasmapheresis, i.e. a blood separation procedure according to which whole blood is separated into blood cells and plasma through contacting said whole blood with one side of said hollow fiber membrane, wherein the blood cells are retained on said one side, while the plasma is penetrating through the membrane pores and collected on the other side thereof. Said separation is conducted through influence of the pressure gradient which is maintained between said two sides of the hollow fiber membrane.

Generally speaking, the present hollow fiber membrane (cut-off in the range of $10^5$-$10^6$ Daltons) may be used in any plasma separation procedure (plasma fractionation), i.e. in the separation of plasma into fractions of proteins with different molecular sizes,in which a certain substance or a certain fraction of substances having molecular weights of up to 3 x $10^6$ Daltons are to be separated from the liquid. Examples of such sepration procedures may be the separation of for example albumin (molecular weight 68 000) from plasma, wherein said albumin togehter with lower molecular weight proteins will pass through the membrane, while higher molecular weight proteins such as IgG, IgA, IgM will be retained on the blood side of the hollow fiber membrane, and the separation of globulins (molecular weight $10^6$ Daltons) from the remaining plasma proteins.

CLAIMS

1. Microporous hollow fiber membrane of hydrophilic polyether-polycarbonate block copolymer for use in plasmapheresis, characterized in that the hollow fiber membrane has an essentially symmetrical wall structure having smoothly rounded pore openings without sharp edges.

2. Hollow fiber membrane according to claim 1, characterized in that the hollow fiber membrane has pores having an average diameter of from 0.008 to 0.8 µm, preferably 0.5 µm.

3. Hollow fiber membrane according to claim 1 or 2, characterized in that the hollow fiber membrane has a porosity of above 65%, preferably 80-85%.

4. Hollow fiber membrane according to any of the preceding claims, characterized in that the hollow fiber membrane has a thickness of from 20 to 300 µm, preferably 100 µm.

5. Hollow fiber membrane according to any of the preceding claims, characterized in that the hydrophilic polyether-polycarbonate block copolymer is chosen among bisphenol A/polyalkylene oxide polycondensates having the general formula:

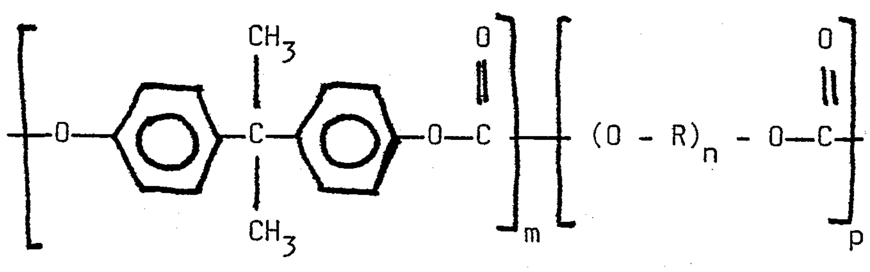

wherein R is designating $CH_2CH_2$ or combinations of $CH_2-CH=CH$ and $CH=CH$, preferably $CH_2CH_2$, m = 40 - 100, preferably 80, n = 10 - 155, preferably 152, and p = 0.5 - 3, preferably 1.

6. A process for the preparation of a microporous hollow fiber membrane of hydrophilic polyether-polycarbonate block copolymer for use in plasmapheresis, which process comprises extruding a solution of the hydrophilic polyether-polycarbonate block copolymer in the form of a hollow fiber and then gelling and optionally washing the extruded hollow fiber,
characterized in that the extruded hollow fiber is gelled with the use of a gelling medium having the capability of only slowly transferring the extruded hollow fiber into a solid state to obtain a microporous hollow fiber membrane having an essentially symmetric wall structure having smoothly rounded pore openings without sharp edges.

7. A process according to claim 6, characterized in that said gelling medium is chosen among acetone/alcohol mixtures, and polar solvent/alcohol mixtures.

8. A process according to claim 7, characterized in that said acetone/alcohol mixtures contain acetone and alcohol in a mix ratio of 3:1.

9. A process according to claim 7, characterized in that said polar solvent/alcohol mixtures contain polar solvent and alcohol in a mix ratio of between 2:1 and 1:2, preferably 1:1.

10. A process according to any of claims 7 - 9, characterized in that said alcohol is isopropyl alcohol.

11. A process according to any of claims 6 - 10, characterized in that said polymer solution is extruded together with a center liquid of the same composition as said gelling medium.

12. A process according to any of claims 6 - 10, characterized in that said polymer solution is extruded together with a center liquid which is inert to the polymer solution, for example paraffin.

13. A process according to any of claims 6 - 12, characterized in that the gelled hollow fiber is washed with a washing medium which is only slowly exchangable with the used gelling medium.

14. A process according to claim 13, characterized in that said washing medium is an alcohol, preferably isopropyl alcohol.

15. A process according to claim 13 or 14, characterized in that the washed hollow fiber is flushed with water and/or alcohol.

16. A process according to any of claims 6 - 15, characterized in that said polyether-polycarbonate block copolymer is chosen among bisphenol A/polyalkylene oxide polycondensates having the general formula

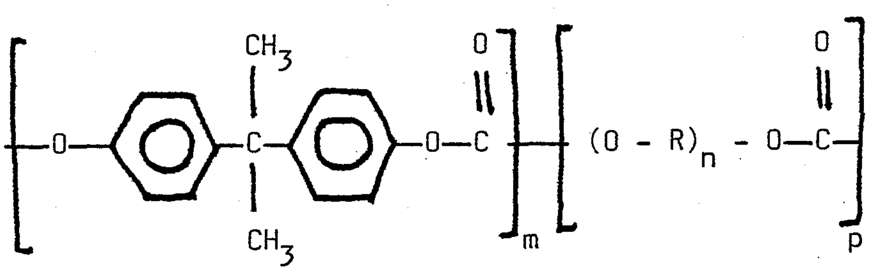

wherein R is designating $CH_2CH_2$ or combinations of $CH_2$-CH=CH and CH=CH, preferably $CH_2CH_2$, m = 40 - 100, preferably 80, n = 10 - 155, preferably 152, and p = 0.5 - 3, preferably 1.

17. A process according to claim 16, characterized in that the polymer solution contains an organic solvent which is chosen among dioxane, dioxolane, dimethyl sulphoxide, dimethyl formamide and mixtures thereof.

18. A process according to claim 17, charcterized in that the polymer solution has a viscosity of between 2 000 cps and 50 0000 cps, preferably 20 000 cps, measured at $20^o$.

19. A process according to any of claims 16 - 18, characterized in that the polymer solution contains a non-solvent as a pore former.

20. a process according to claim 19, characterized in that said non-solvent is chosen among polyalkylene oxide, salt, glycerin, polyvinyl pyrrolidone, preferably polyethylene glycol.